# EUROPEAN PATENT APPLICATION

(11) **EP 4 786 662 A1**
(43) Date of publication of application: **05.08.2026**
(21) Application number: 25222202.1
(22) Date of filing: 10.12.2025
(51) Int. Cl.: D03D 1/00, B29B 11/16, B29C 70/24, D03D 25/00, F01D 5/28

(54) **METHOD OF MANUFACTURING A WOVEN FABRIC FOR A COMPOSITE AIRFOIL FOR A TURBINE ENGINE**

(30) Priority: 30.01.2025 US 202519040973
(71) Applicant: General Electric Company, Cincinnati, Ohio 45215 (US)
(72) Inventor: XIE, Ming, Evendale, 45215 (US); ARMSTRONG, Douglas Lorrimer, Evendale, 45215 (US)
(74) Representative: Openshaw & Co.

(57) **Abstract**

A three-dimensional woven fabric (400, 500, 600, 700) for a composite airfoil (300) for a turbine engine (100) and methods of manufacturing such a fabric. The method includes forming, during weaving a plurality of reinforcing fiber tows (202), a spar section (410) of the woven fabric (400, 500, 600, 700). The method also includes forming, during weaving the plurality of reinforcing fiber tows (202), a first edge section (420, 440) integrally woven with the spar section (410) and extending in a second direction therefrom and forming, during weaving the plurality of reinforcing fiber tows (202), a second edge section (430, 450) integrally woven with the spar section (410) and extending in the second direction therefrom, the second edge section (430, 450) being positioned opposite the first edge section (420, 440) with a gap (462, 464) formed therebetween.

## Description

### TECHNICAL FIELD

The present disclosure relates to composite airfoils and methods of manufacturing composite airfoils, particularly, composite airfoils for aircraft engines.

### BACKGROUND

Turbine engines used in aircraft generally include a fan and a turbo-engine section arranged in flow communication with one another. A combustor is arranged in the turbo-engine to generate combustion gases for driving a turbine in the turbo-engine of the turbine engine, and the turbine may be used to drive the fan. A portion of air flowing into the fan flows through the turbo-engine as core air, and another portion of the air flowing into the fan bypasses the core section and flows through the turbine engine as bypass air. The turbo-engine section may include one or more compressors to compress the core air before the core air flows into the combustor. Composite materials may be used to manufacture various components of the turbine engine, particularly, when the turbine engine is a turbine engine for an aircraft.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic, cross-sectional view of a turbine engine for an aircraft.
FIGS. 2A is a schematic view of a three-dimensional fiber weave pattern.
FIG. 2B is a schematic, cross-sectional view of the fiber weave pattern shown in FIG. 2A taken along line 2B-2B in FIG. 2A.
FIG. 2C is a schematic, cross-sectional view of a fiber weave pattern shown similar to the fiber weave pattern shown in FIG. 2A, but with a different interlocking fiber pattern.
FIG. 2D is a schematic, cross-sectional view of a fiber weave pattern similar to the fiber weave pattern shown in FIG. 2A, but with another interlocking fiber pattern.
FIG. 3 is a flow chart of a process of manufacturing a composite component that may be used in the turbine engine of FIG. 1.
FIG. 4 is a schematic cross-sectional view, taken along line 4-4 in FIG. 1, of an airfoil that may be used in the turbine engine shown in FIG. 1.
FIGS. 5A, 5B, and 5C illustrate a method of forming the airfoil shown in FIG. 4. FIG. 5A is a schematic, cross-sectional view of a woven fabric that may be used to form the airfoil. FIG. 5B is a schematic, cross-sectional view showing filler material being inserted into the into the woven fabric to form an initial preform. FIG. 5C is a schematic, cross-sectional view of the initial preform being shaped to form a shaped preform.
FIGS. 6A and 6B illustrate additional steps that may be used in the method of forming the airfoil. FIG. 6A is a schematic, cross-sectional view of a woven fabric that may be used to form the airfoil. FIG. 6B is a schematic, cross-sectional view of edge sections of the woven fabric being separated.
FIGS. 7A, 7B, and 7C illustrate a variation to that shown in FIGS. 5A, 5B, and5C of a method of forming the airfoil shown in FIG. 4. FIG. 7A is a schematic, cross-sectional view of a woven fabric that may be used to form the airfoil. FIG. 7B is a schematic, cross-sectional view showing filler material being inserted into the into the woven fabric to form an initial preform. FIG. 7C is a schematic, cross-sectional view of the initial preform being shaped to form a shaped preform.
FIGS. 8A and 8B illustrate a method of forming the airfoil shown in FIG. 4. FIG. 8A is a schematic, cross-sectional view of a woven fabric that may be used to form the airfoil. FIG. 8B is a schematic view showing filler material being inserted into the into the woven fabric to form an initial preform.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The singular forms "a," "an," and "the" include plural references unless the context clearly dictates otherwise.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), and a metal matrix composite (MMC). The composite may be formed of a matrix material and a reinforcing element, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle.

"Preform" as used herein is a piece of three-dimensional woven fabric formed by a plurality of reinforcing fibers including warp fiber tows and weft fiber tows.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. The adhesive can require curing at elevated temperatures or other hardening techniques.

As used herein, PMC refers to a class of materials and more specifically a class of composite materials using a polymer matrix material. Resins for matrix materials of PMCs can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

The PMC material may be a prepreg. A prepreg is a reinforcement material (e.g., a reinforcing fiber) pre-impregnated with the polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers.

Instead of using a prepreg with thermoplastic polymers, another non-limiting example utilizes dry reinforcing fibers. The reinforcing fibers and, more specifically, reinforcing fiber tows may be woven together as a woven fabric. Woven fabrics can include, but are not limited to, dry carbon fibers woven together exclusively or woven together with polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. As noted above, the matrix material can include thermoplastic and thermoset resins. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods, including, but not limited to, melt infiltration, chemical vapor infiltration, polymer impregnation pyrolysis (PIP), or any combination thereof.

The term "metallic" as used herein is indicative of a material that is metal-based including metals, such as, but not limited to, titanium, iron, aluminum, stainless steel, and nickel alloys. A metallic material or a metal alloy can be a combination of at least two or more elements or materials, where at least one is a metal.

As used herein, an alloy is "based" on a particular element when that element is present in the alloy at the greatest weight percent, by total weight of the alloy, of all elements contained in the alloy. For example, an iron-based alloy has a higher weight percentage of iron than any other single element present in the alloy.

As noted above, certain components of gas turbine engines, particularly, those used in aircraft, may be made from composite materials. Such components include, for example, various airfoils such as fan blades or compressor blades. These airfoils can include a spar that is a separate piece of structure from the rest of the airfoil. The composite airfoils disclosed herein have a spar portion that is integrally formed with the other portions of the airfoil. More specifically, the spar portion and the edge portions are integrally formed using a three-dimensional (3D) woven fabric.

Traditional two-dimensional (2D) layup designs typically used for forming composite gas turbine engine components are challenging to manufacture and may have limited interlaminar strength. Specifically, composite components for gas turbine engines are generally constructed with hand laid plies or by combining multiple woven or prefabricated preforms into one molded part. Hand layup or assembly of preforms increases the labor and costs required to build the component. Assembly of preforms also comes with assembly and positioning challenges. Moreover, a composite component formed from 2D plies or multiple preforms will be more likely to have limited interlaminar loading capability. Using a 3D woven fabric with the spar section integrally formed with the edge sections avoids these limitations and provides a strong airfoil even in the thickness direction and functions as a unitary or monolithic structure.

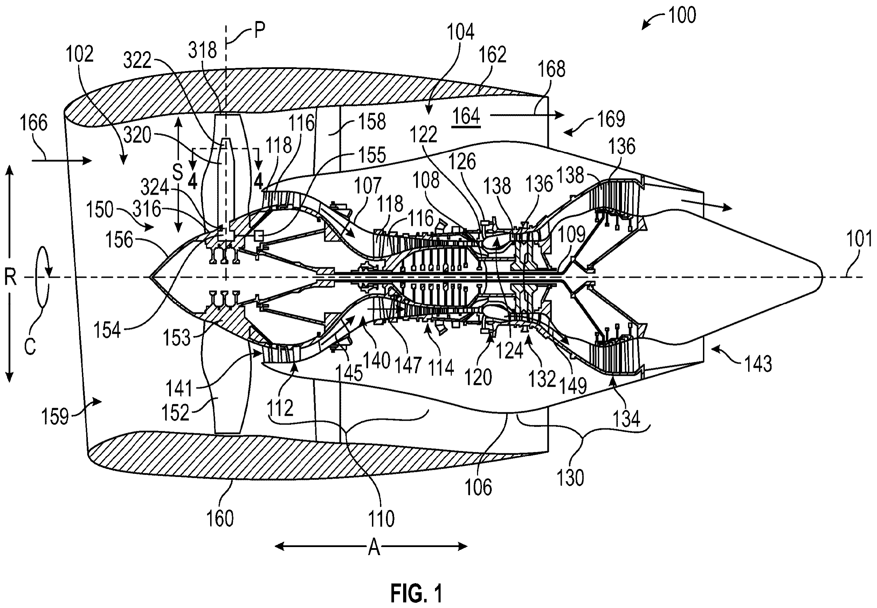

The composite airfoils discussed herein may be particularly suitable for use in turbine engines for aircraft. FIG. 1 is a schematic, cross-sectional view a turbine engine 100 that may be used on an aircraft. The turbine engine 100 has an axial direction A (extending parallel to a longitudinal centerline axis 101, shown for reference in FIG. 1), a radial direction R, and a circumferential direction C. The circumferential direction C extends in a direction rotating about the longitudinal centerline axis 101 (the axial direction A). In the embodiment depicted in FIG. 1, the turbine engine 100 is a high bypass turbofan engine, including a fan section 102 and a turbo-engine 104 disposed downstream from the fan section 102.

The turbo-engine 104 depicted in FIG. 1 includes in serial flow relationship, a compressor section 110, a combustion section 120, and a turbine section 130. The turbo-engine 104 is substantially enclosed within an outer casing 106 that is substantially tubular and defines a core inlet 141. In this embodiment, the core inlet 141 is annular. As schematically shown in FIG. 1, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbo-engine 104 further includes a core air exhaust nozzle 143 (also referred to as a jet exhaust nozzle) that is downstream of the turbine section 130. The compressor section 110, the combustion section 120, and the turbine section 130 together define, at least in part, a core air flow path 140 extending from the core inlet 141 to the core air exhaust nozzle 143, and through which core air 145 flows. As will be discussed in more detail below, the turbo-engine 104 includes a high-pressure (HP) shaft 108 or a HP spool, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 may include a plurality of compressor stages. In each stage, a plurality of compressor blades 116 rotate relative to a corresponding plurality of static compressor vanes 118 (also called nozzles) to compress or to pressurize the core air 145 passing through the stage. In a single compressor stage, the plurality of compressor blades 116 can be provided in a ring, extending radially outwardly relative to the longitudinal centerline axis 101 from a blade platform to a blade tip (e.g., extend in the radial direction R). The compressor blades 116 may be a part of a compressor rotor that includes a disk and the plurality of compressor blades 116 extend radially from the disk. Other configurations of the compressor rotor may be used, including, for example, blisks where the disk and the compressor blades 116 are integrally formed with each other to be a single piece. The corresponding static compressor vanes 118 are positioned upstream of and adjacent to the rotating compressor blades 116. The compressor vanes 118 for a stage of the compressor can be mounted to a core casing 107 in a circumferential arrangement. The core casing 107 may define, at least in part, the core air flow path 140. Each compressor stage may be used to sequentially compress the core air 145 flowing through the core air flow path 140, generating compressed air 147. Any suitable number of compressor blades 116, compressor vanes 118, and compressor stages may be used.

Each of the HP turbine 132 and the LP turbine 134 also may include a plurality of turbine stages. In each stage, a plurality of turbine blades 136 rotate relative to a corresponding plurality of static turbine vanes 138 (also called a nozzle) to extract energy from combustion gases 149 passing through the stage. The turbine blades 136 may be a part of a turbine rotor. Any suitable configuration for a turbine rotor may be used, including, for example, a disk with the plurality of turbine blades 136 extending from the disk. The corresponding static turbine vanes 138 are positioned upstream of and adjacent to the rotating turbine blades 136. The turbine vanes 138 for a stage of the turbine can be mounted to the core casing 107 in a circumferential arrangement.

In the combustion section 120, fuel, received from a fuel system (not shown), is injected into a combustion chamber 124 of a combustor 122 by fuel nozzles 126. The fuel is mixed with the compressed air 147 from the compressor section 110 to form a fuel and air mixture, and combusted, generating combustion products (i.e., combustion gases 149). As will be discussed further below, adjusting a fuel metering unit (not shown) of the fuel system changes the volume of fuel provided to the combustion chamber 124 and, thus, changes the amount of propulsive thrust produced by the turbine engine 100 to propel the aircraft. The combustion gases 149 are discharged from the combustion chamber 124. These combustion gases may be directed into the turbine blades 136 of the HP turbine 132 and, then, the turbine blades 136 of the LP turbine 134, and the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The turbine engine 100 and, more specifically, the turbo-engine 104 further includes one or more drive shafts. As noted above, the turbo-engine 104 includes the high-pressure (HP) shaft 108 drivingly connecting the HP turbine 132 to the HP compressor 114, and the low-pressure (LP) shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases 149 are routed into the HP turbine 132 and expanded through the HP turbine 132 where a portion of thermal energy or kinetic energy from the combustion gases 149 is extracted via the one or more stages of the turbine blades 136 and turbine vanes 138 of the HP turbine 132. This causes the HP shaft 108 to rotate, which supports operation of the HP compressor 114 (self-sustaining cycle) and rotating the compressor rotors and, thus, the compressor blades 116 of the HP compressor 114 via the HP shaft 108. In this way, the combustion gases 149 do work on the HP turbine 132. The combustion gases 149 are then routed into the LP turbine 134 and expanded through the LP turbine 134. Here, a second portion of the thermal energy or the kinetic energy is extracted from the combustion gases 149 via one or more stages of the turbine blades 136 and the turbine vanes 138 of the LP turbine 134. This causes the LP shaft 109 to rotate, which supports operation of the LP compressor 112 (self-sustaining cycle), and rotating the compressor rotors and, thus, the compressor blades 116 of the LP compressor 112 via the LP shaft 109. In this way, the combustion gases 149 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline axis 101 and, as discussed above, coupled to rotatable elements such as the compressor rotors and the turbine rotors.

The fan section 102 shown in FIG. 1 includes a fan 150 having a plurality of fan blades 152 coupled to a disk 153. As depicted in FIG. 1, the fan blades 152 extend outwardly from the disk 153 generally along the radial direction R. In the case of a variable pitch fan, as depicted in FIG. 1, for example, the plurality of fan blades 152 are rotatable relative to the disk 153 about a pitch axis P. Each of the fan blades 152 can be connected to the disk 153 by a pitch bearing 154 that allows for rotation of the fan blades 152 about the pitch axis P. The fan blades 152 are rotatable within the pitch bearing 154 by an actuator 155 operatively coupled to the fan blades 152 to collectively vary the pitch of the fan blades 152 in unison. The fan blades 152 and the disk 153 are rotatable, together, about the longitudinal centerline (axis) 101 by the LP shaft 109. The LP compressor 112 may also be directly driven by the LP shaft 109, as depicted in FIG. 1. The disk 153 is covered by a fan hub 156 aerodynamically contoured to promote an airflow through the plurality of fan blades 152. Further, a nacelle 160 circumferentially surrounds the fan 150, and, in the depicted embodiment, at least a portion of the turbo-engine 104. The nacelle 160 may also be referred to as an annular fan casing or an outer nacelle. The nacelle 160 is supported relative to the turbo-engine 104 and, more specifically, the outer casing 106 by a plurality of outlet guide vanes 158 that are circumferentially spaced about the nacelle 160 and the turbo-engine 104. A downstream section 162 of the nacelle 160 extends over an outer portion of the turbo-engine 104 and, more specifically, the outer casing 106 so as to define a bypass airflow passage 164 therebetween.

During operation of the turbine engine 100, a volume of air 166 enters the turbine engine 100 through an inlet of the nacelle 160 and/or the fan section 102 (referred to herein as an engine inlet 159). As the volume of air 166 passes across the fan blades 152, a first portion of air (bypass air 168) is directed or routed into the bypass airflow passage 164, and a second portion of air (core air 145) is directed or is routed into an upstream section of the core air flow path 140, or, more specifically, into the core inlet 141. The ratio between the bypass air 168 and the core air 145 is commonly known as a bypass ratio. Simultaneously with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust. The bypass air discharge nozzle 169 and the core air exhaust nozzle 143 are air exhaust nozzles of the turbine engine 100.

The turbine engine 100 shown in FIG. 1 and discussed herein (turbofan engine) is provided by way of example only. In other embodiments, any other suitable engine may be utilized with aspects of the present disclosure. For example, in other embodiments, the engine may be any other suitable gas turbine engine, such as a turboshaft engine, a turboprop engine, a turbojet engine, an unducted single fan engine, and the like. In such a manner, in other embodiments, the gas turbine engine may have other suitable configurations, such as other suitable numbers or arrangements of shafts, compressors, turbines, fans, etc. Further, although the turbine engine 100 is shown as a direct drive, fixed-pitch turbofan engine, in other embodiments, the turbine engine 100 may be a geared turbine engine (e.g., including a gearbox between the fan 150 and a shaft driving the fan, such as the LP shaft 109), may be a variable pitch turbine engine (i.e., including a fan 150 having a plurality of fan blades 152 rotatable about their respective pitch axes), etc. Further, still, in alternative embodiments, aspects of the present disclosure may be incorporated into, or otherwise utilized with, any other type of engine, such as reciprocating engines.

The turbine engine 100 discussed herein is suitable for use on aircraft. Suitable aircraft include, for example, airplanes, helicopters, and unmanned aerial vehicles (UAV). In other embodiments, the turbine engine may be any other turbine engine, such as an industrial turbine engine incorporated into a power generation system, or a nautical turbine engine on a ship or other vessel.

Various components of the turbine engine 100 may be formed from composite materials. These components are referred to herein as composite components. The fan blades 152, the outlet guide vanes 158, the compressor blades 116, and the compressor vanes 118 may be made from PMC materials, for example. Other composites, such as CMC materials, may be used for other components, including, for example, turbine blades 136, turbine vanes 138, and components of the combustion section 120 such as combustor liners used to form the combustion chamber 124. Moreover, although the embodiments are described relative to a turbine engine 100, the composite component and methods of manufacturing may be used to form composite components used in applications beyond turbine engines.

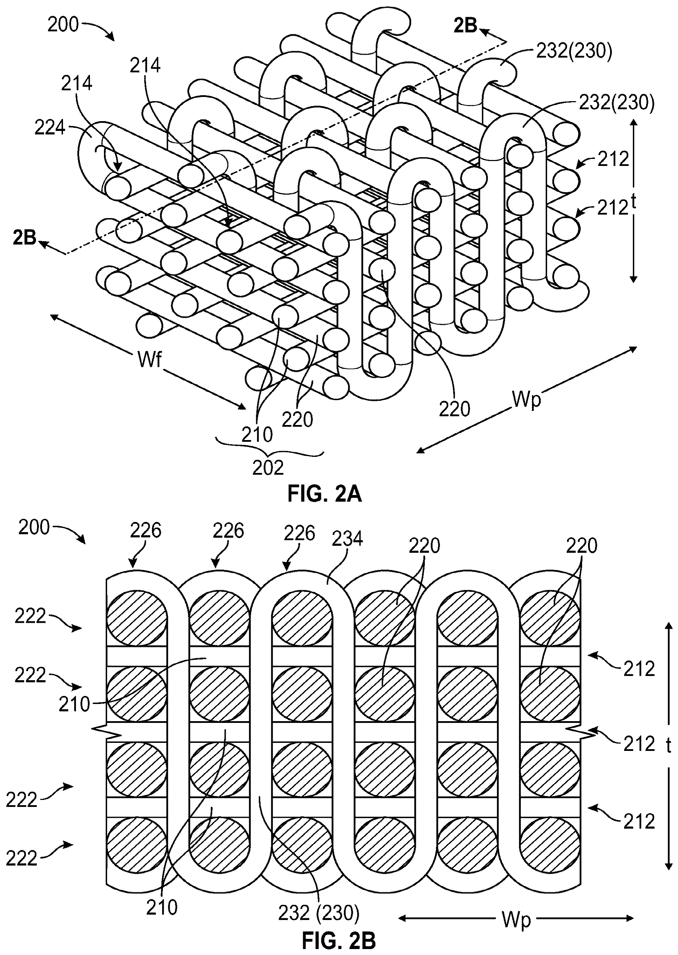

FIGS. 2A and 2B are schematics showing a three-dimensional fiber weave pattern that may be used to form a woven fabric 200. FIG. 2B is a cross-sectional view taken along line B-B in FIG. 2A. In embodiments discussed herein, the composite components may be formed from a plurality of reinforcing fibers and, more specifically a plurality of reinforcing fiber tows 202. The plurality of reinforcing fiber tows 202 are woven together to form the woven fabric 200. The plurality of reinforcing fiber tows 202 includes a plurality of first fiber tows, which, in this embodiment, is a plurality of warp fiber tows 210. The plurality of reinforcing fiber tows 202 also includes a plurality of second fiber tows, which, in this embodiment, is a plurality of weft fiber tows 220. The weft fiber tows 220 are oriented transversely to the warp fiber tows 210, and, in the depicted embodiment, the warp fiber tows 210 and the weft fiber tows 220 are oriented generally orthogonally to each other. The woven fabric 200 thus includes a warp direction Wp (also referred to as a first direction) and a weft direction Wf (also referred to as a second direction). The warp fiber tows 210 extend in the warp direction Wp and the weft fiber tows 220 extend in the weft direction Wf.

In the depicted embodiment, the woven fabric 200 is a three-dimensional woven fabric and the woven fabric 200 also includes a thickness direction t. The thickness direction may also be referred to as a z direction. The warp fiber tows 210 may be arranged relative to each other to form a plurality of warp fiber layers 212 in the thickness direction t and to form a plurality of warp fiber columns 214 in the weft direction Wf. Three warp fiber layers 212 are depicted in FIGS. 2A and 2B, but the woven fabric 200 may include any other numbers of warp fiber layers 212, including more than three warp fiber layers 212.

During a weaving process, the warp fiber tows 210 may be held in tension in the warp direction Wp, and one of the weft fiber tows 220 is passed or drawn therethrough. A shuttle (not shown) may be used to draw the one of the weft fiber tows 220 through the warp fiber tows 210. The shuttle may be passed through the warp fiber tows 210 in a first direction and then reversed to pass through the warp fiber tows 210 at a different height in the thickness direction forming a plurality of weft fiber layers 222 in the thickness direction t. One of the weft fiber tows 220 may be continuous through at least a portion of the thickness of the woven fabric 200, and the one of the weft fiber tows 220 may include a portion extending in the thickness direction t, which may be referred to in some embodiments as a turnaround. This portion of the weft fiber tow thus may be referred to herein as a turnaround portion 224. The warp fiber tows 210 may be moved relative to each other to allow a space for the one of the weft fiber tows 220 to pass through the space. The warp fiber tows 210 may be moved relative to each other in different ways to create different patterns. In this way, weaving the woven fabric 200 includes positioning the warp fiber tows 210 (e.g., such that the warp fiber tows 210 are held stationary in tension), then laying the weft fiber tows 220 (e.g., such that the weft fiber tows 220 are drawn through and inserted over and under the corresponding warp fiber tows 210), and repeating this process until the woven fabric 200 is formed. The weft fiber tows 220 may be arranged relative to each other to form the plurality of weft fiber layers 222 in the thickness direction t and to form a plurality of weft fiber columns 226 in the warp direction Wp.

The woven fabric 200 also includes a plurality of interlocking fiber tows 230 (also referred to as Z-weaver fiber tows). The interlocking fiber tows 230 are additional warp fiber tows that are directed through the thickness of the woven fabric 200 during weaving to stitch the reinforcing fiber tows 202 together. The interlocking fiber tows 230 are woven to extend between two or more of the weft fiber layers 222. Different fiber patterns may be used for the interlocking fiber tows 230. A first interlocking fiber pattern, shown in FIGS. 2A and 2B, is an orthogonal interlocking pattern and the interlocking fiber tows 230 are referred to herein as orthogonal interlocking fiber tows 232. In this pattern, the orthogonal interlocking fiber tows 232 extend substantially in a direction that is orthogonal to the warp direction Wp, which is the thickness direction t in the depicted embodiment. As with the weft fiber tows 220, the interlocking fiber tows 230 (e.g., the orthogonal interlocking fiber tows 232) may include a turnaround portion 234. In the depicted embodiment, the turnaround portion 234 of the orthogonal interlocking fiber tows 232 is positioned to form an alternating pattern between each warp fiber columns 214. In the depicted embodiment, the orthogonal interlocking fiber tows 232 extend through the thickness of the woven fabric 200 and may be referred to as through-thickness interlocking fiber tows, but other thicknesses may be used.

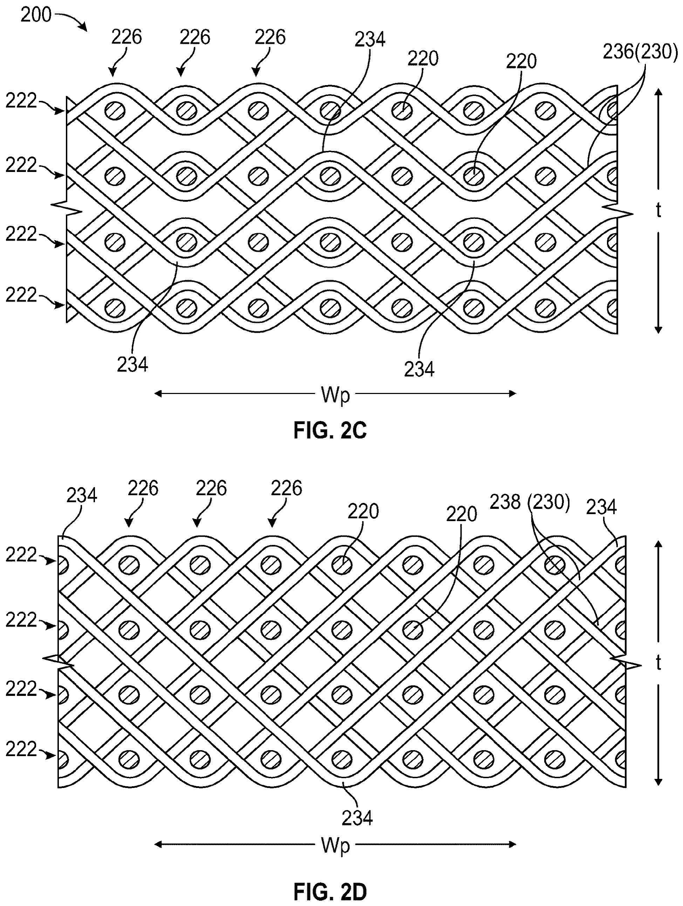

A second interlocking fiber pattern, shown in FIG. 2C, is an angle interlock pattern and, more specifically, a layer-to-layer angle interlock pattern. FIG. 2C is a cross-sectional view of a woven fabric taken from a perspective similar to FIG. 2B. The interlocking fiber tows 230 are referred to in this embodiment as angled interlocking fiber tows 236. Instead of extending orthogonally through the woven fabric 200, the angled interlocking fiber tows 236 form an oblique angle relative to the warp direction Wp. In the depicted embodiment, the angled interlocking fiber tows 236 extend through adjacent weft fiber layers 222 in an alternating or a sinusoidal pattern to interlock these adjacent layers with each other, with the oblique angle formed between adjacent turnaround portions 234 of the angled interlocking fiber tows 236. The turnaround portions 234 of the angled interlocking fiber tows 236 are located on every other weft fiber columns 226, but, in other embodiments, two or more weft fiber columns 226 may be between adjacent turnaround portions 234 of the angled interlocking fiber tows 236. In other embodiments, the angled interlocking fiber tows 236 may extend through more than two adjacent weft fiber layers 222. For example, as shown in FIG. 2D, the interlocking fiber tows 230 are through-thickness interlocking fiber tows, which are referred to herein as through-thickness angled interlocking fiber tows 238. FIG. 2D is a cross-sectional view of a woven fabric taken from a perspective similar to FIG. 2B. The weft fiber tows 220 are omitted in FIGS. 2C and 2D for clarity.

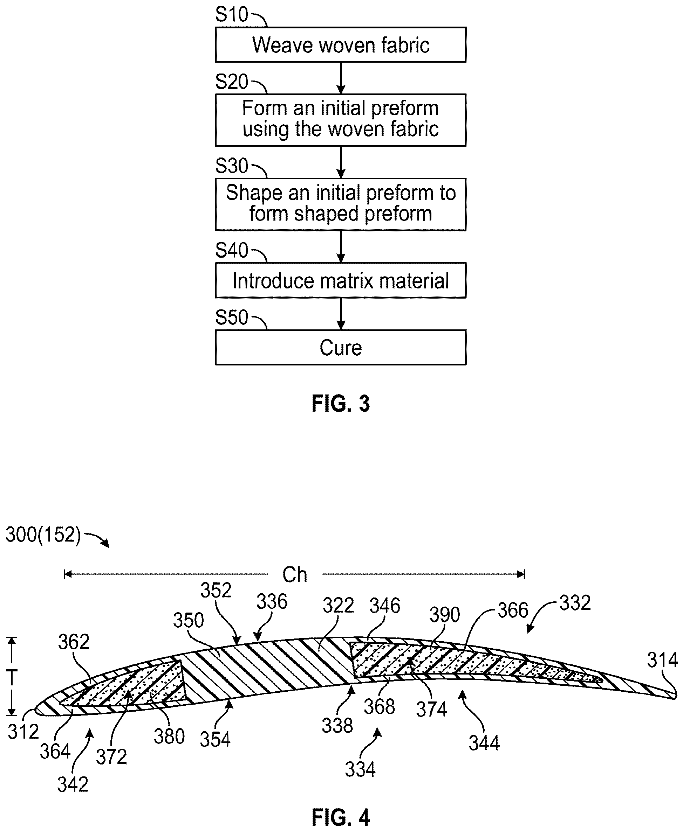

FIG. 3 is a flow chart of a method or a process of manufacturing a composite component that may be used in the turbine engine of FIG. 1. The method includes, in step S10, weaving the woven fabric 200, such as on a loom. In step S20, the method includes forming or preparing a preform and, more specifically, an initial preform using one or more pieces of woven fabric 200. This step may include, for example, laying up a plurality of woven fabrics 200 or otherwise positioning the plurality of woven fabrics 200 relative to each other to form the initial preform. In step S30, the initial preform is shaped to form a shaped preform. Shaping the initial preform may include, for example, using a mold tool to shape the initial preform. Suitable shaping processes may include vacuum forming or other forming processes to impart a shape to the initial preform. The shaped preform may form a final preform, but, optionally, additional machining processes and manufacturing processes, such as adding filler material, may be carried out on the shaped preform to form the final preform.

In step S40, a matrix material is introduced into the preform. For example, after the preform is complete (i.e., the final preform), a matrix material may be injected into the preform in step S40 to generate an infiltrated (or an impregnated) preform. When the composite component is a polymer matrix composite, polymers and/or a resin may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes be used in this step depending upon the matrix material. The matrix material may be introduced in other ways. As noted above, the preform may be formed using prepreg fiber tows to introduce a matrix material, and, in such an embodiment, the matrix material is introduced when the reinforcing fiber tows 202 (FIG. 2A) are woven into the preform (step S10) or when the reinforcing fiber tows 202 are otherwise laid up. When prepreg fiber tows are used, an explicit step of injecting a resin material may be omitted.

The method continues with curing the infiltrated preform in step S50 to bond the composite material and, more specifically, the matrix together forming the composite component. The curing process depends upon the material and may include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material.

Further, the composite component may be finish machined as needed. Finish machining may define the final finished shape or contour of the composite component. For example, when the composite component is a fan blade 152 (FIG. 1), the edges of the fan blade 152 may be machined to define the final shape or the contour of the airfoil. Additionally, the composite component can be coated with one or more suitable coatings, such as, e.g., an environmental barrier coating (EBC) or a polyurethane surface coating.

FIG. 4 is a schematic cross-sectional view of a composite component that may be used in the turbine engine 100 of FIG. 1. As noted above, various components of the turbine engine 100 may be composite components formed from composite materials, and, in particular, a preform formed of one or more woven fabrics 200 (FIG. 2A). As depicted in FIG. 4, the composite component is an airfoil 300. More specifically, the airfoil 300 shown depicted in FIG. 4 is one of the fan blades 152, and FIG. 4 is a cross-sectional view of the fan blade 152 taken along line 4-4 in FIG. 1. The description of the airfoil 300, however, applies to the other airfoils of the turbine engine 100, including, for example, the compressor blades 116 (FIG. 1).

The airfoil 300 includes a leading edge 312, a trailing edge 314, a root end 316 (FIG. 1), and a tip 318 (FIG. 1). In this example, when the airfoil 300 is the fan blade 152, the airfoil 300 is connected on the root end 316 to a central support, such as the disk 153, about which the airfoil 300 rotates in the circumferential direction C, as shown in FIG. 1. The airfoil 300 extends outwardly in the radial direction R from the root end 316 to the tip 318. This direction may also be referred to as the spanwise direction S. Also, as shown in FIG. 1, each of the fan blades 152 may include a spar 320 that provides structural support for the fan blade 152. The spar 320 includes a main body 322 and a root 324. The root 324 engages with the disk 153 and connects the fan blade 152 and, more specifically, the spar 320 to the disk 153. More specifically, the root 324 can include a shaft portion that engages with the pitch bearing 154 to be rotatably connected to the disk 153 and rotated by the actuator 155 about the pitch axis P.

Referring back to FIG. 4, the airfoil 300 includes a suction side 332 and a pressure side 334, and surfaces of the airfoil 300 are formed on each of the suction side 332 and the pressure side 334 between the leading edge 312 and the trailing edge 314. These surfaces are a suction surface 336 and a pressure surface 338. As can be seen in FIG. 4, the airfoil 300 is a cambered airfoil with the suction surface 336 having a convex curvature and the pressure surface 338 having a concave curvature. The airfoil 300 may have any suitable shape, however, including, for example, flat surfaces, and the airfoil 300 may be a symmetric airfoil. The suction surface 336 and the pressure surface 338 are positioned on opposite sides of the airfoil 300 such that, when air flows over the suction surface 336 and the pressure surface 338 as the airfoil 300 rotates about a rotation axis (e.g., the longitudinal centerline axis 101 in FIG. 1), the airfoil 300 generates lift (thrust). The airfoil 300 also includes a chordwise direction Ch, perpendicular to the spanwise direction S (FIG. 1) and extending from the leading edge 312 to the trailing edge 314. A thickness direction T of the airfoil 300 is also perpendicular to each of the spanwise direction S and the chordwise direction Ch. Similarly, the airfoil 300 also includes a leading portion 342 and a trailing portion 344.

The airfoil 300 is a composite component comprised of a composite material including a matrix material formed around the reinforcing fiber tows 202 (FIG. 2A). More specifically, the airfoil 300 includes a plurality of composite sections. These composite sections can be directly attached to each other, as depicted in FIG. 4, and can be integrally formed with each other. The composite material can be, for example, a polymer matrix composite (PMC), as discussed above, but other composite materials may be used. The reinforcing fiber tows 202 are omitted in FIG. 4 for clarity.

The spar 320 (FIG. 1) and, more specifically, the main body 322 is a composite component, and one section of the plurality of composite sections is a spar section 350 forming the main body 322. The plurality of composite sections also includes a plurality of edge sections. The plurality of edge sections collectively form, at least in part, a skin 346 of the airfoil 300. The skin 346 forms the exterior surface of a blade portion of the fan blade 152 including at least a portion of the suction surface 336 and the pressure surface 338. As noted above, the airfoil 300 has a leading portion 342. Two edge sections (a first edge section and a second edge section) of the plurality of edge sections are located in the leading portion 342. These edge sections are referred to herein as a first leading edge section 362 and a second leading edge section 364. Additionally, two edge sections (a first edge section and a second edge section) of the plurality of edge sections are located in the trailing portion 344. These edge sections are referred to herein as a first trailing edge section 366 and a second trailing edge section 368.

The spar section 350 also includes outer surfaces, more specifically, a first outer surface 352 and a second outer surface 354. The first leading edge section 362 and the first trailing edge section 366 are located on the suction side 332 and, together with the first outer surface 352 of the spar section 350, form the suction surface 336 in the depicted embodiment. Similarly, the second leading edge section 364 and the second trailing edge section 368 are located on the pressure side 334 and, together with the second outer surface 354 of the spar section 350, form the pressure surface 338 in the depicted embodiment.

The first leading edge section 362 and the second leading edge section 364, together with the spar section 350, collectively define an internal cavity, which is referred to herein as a leading cavity 372. A piece of filler material, referred to herein as a leading piece of filler material 380, can be located in the leading cavity 372. Similarly, the first trailing edge section 366 and the second trailing edge section 368, together with the spar section 350, collectively define an internal cavity, which is referred to herein as a trailing cavity 374. A piece of filler material, referred to herein as a trailing piece of filler material 390, can be located in the trailing cavity 374. The filler material provides limited structural support or load capacity to the airfoil 300 and is preferably formed from a light-weight material. For example, the piece of filler material (e.g., leading piece of filler material 380 and the trailing piece of filler material 390) can be a piece of foam or other light weight material such as a polymeric material in a honeycomb structure. Alternatively, the piece of filler material (e.g., leading piece of filler material 380 and the trailing piece of filler material 390) can be a fugitive material (e.g., a piece of fugitive material). A fugitive material is material that is intended to be consumed or extracted from the part (e.g., the airfoil 300) by liquification or other means, leaving an open volume. An example method is the loss wax process.

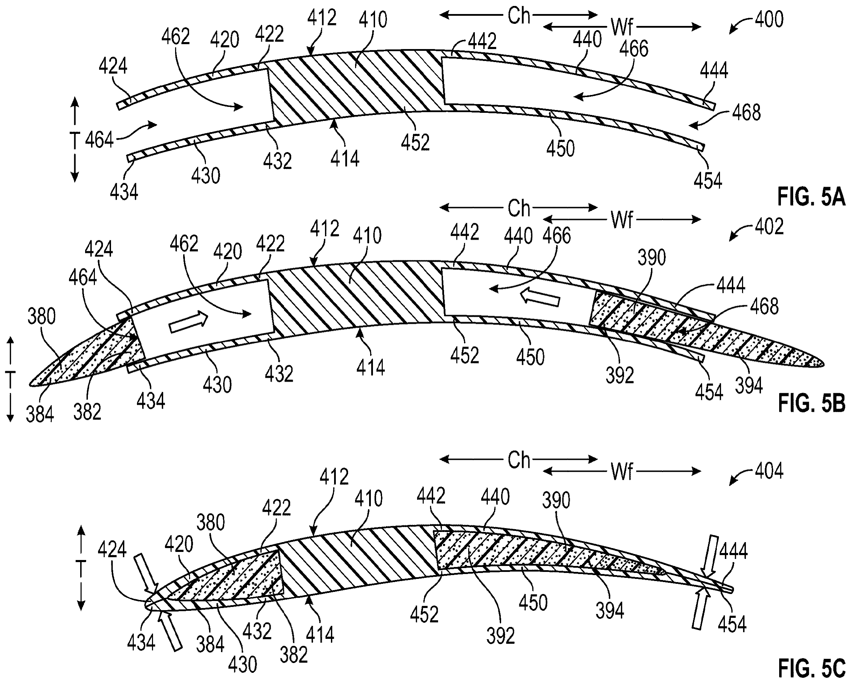

FIGS. 5A to 5C illustrate a method of forming the airfoil 300 shown in FIG. 4. FIG. 5A depicts a first step of providing a woven fabric 400. More specifically, FIG. 5A is a schematic, cross-sectional view of the woven fabric 400 that may be used to form the airfoil 300. The cross section depicted in FIG. 5A corresponds to the section of the airfoil 300 shown in FIG. 4 after the subsequent processing steps are completed. The woven fabric 400 thus also includes a length direction that corresponds to the spanwise direction S (FIG. 1). The woven fabric 400 also includes a width that corresponds to the chordwise direction Ch and a thickness direction that corresponds to the thickness direction T of the airfoil 300.

The woven fabric 400 may be formed similarly to the woven fabric 200 discussed above with reference to FIGS. 2A to 2D, and that discussion applies here. During the process of weaving the plurality of reinforcing fiber tows 202 (FIG. 2A) to form the woven fabric 400, the reinforcing fiber tows 202 are woven to form a plurality of sections of the woven fabric 400. The following discussion will focus on the sections of the woven fabric 400 and the reinforcing fiber tows 202 are omitted from FIG. 5A and subsequent figures for clarity. Although discussed separately, the plurality of sections of the woven fabric 400 is integrally formed as part of a continuous fabric. The warp fiber tows 210 (FIG. 2A) can be oriented in the spanwise direction S (FIG. 1) or the length direction of the woven fabric 400. The weft fiber tows 220 (FIG. 2A) can be oriented in the width direction or the chordwise direction Ch of the woven fabric 400. The spanwise direction S is the warp direction Wp (FIG. 2A), and the chordwise direction Ch is the weft direction Wf. With such an orientation, the warp fiber columns 214 together with the turnaround portions 224 (FIG. 2A) of the weft fiber tows 220 (FIG. 2A) are controlled and positioned during the weaving process (step S10 discussed above with reference to FIG. 3) to form the different sections in the following discussion. The warp fiber layers 212 (FIG. 2A) and the weft fiber layers 222 (FIG. 2A) can be controlled to define the thickness of each section and the overall thickness of the woven fabric 400, with the interlocking fiber tows 230 arranged to provide interlaminar strength, as discussed further below.

The woven fabric 400 includes a spar section 410 that includes the reinforcing fiber tows 202 (FIG. 2A) to form the spar section 350 (FIG. 4) of the airfoil 300 (FIG. 4). The first outer surface 412 has a thickness extending from a first outer surface 412 to a second outer surface 414. The woven fabric 400 also includes a plurality of edge sections include the reinforcing fiber tows 202 used to form the plurality of edge sections of the airfoil 300 discussed above. More specifically, two edge sections (a first edge section and a second edge section) are leading edge sections of the woven fabric 400 and are referred to herein as a first leading edge section 420 and a second leading edge section 430. Each of the first leading edge section 420 and the second leading edge section 430 is integrally woven with the spar section 410 and extend in the chordwise direction Ch, which, as noted above, is the weft direction Wf of the woven fabric 400 in the depicted embodiment. Similarly, two edge sections (a first edge section and a second edge section) are trailing edge sections of the woven fabric 400 and are referred to herein as a first trailing edge section 440 and a second trailing edge section 450. Each of the first trailing edge section 440 and the second trailing edge section 450 is also integrally woven with the spar section 410 and extends in the chordwise direction Ch (the weft direction Wf). The first leading edge section 420 and the second leading edge section 430 are positioned on opposite sides of the spar section 410 in the chordwise direction Ch (the weft direction Wf) from the first trailing edge section 440 and the second trailing edge section 450. Integrally weaving the leading edge sections and the trailing edge sections with the spar section 410 (an integral preform design), reduces or even eliminates the subsequent preform build up and assembly processes. Additionally, this integral preform design results in an airfoil that is stronger and have has structural integrity than a airfoil design with separate pieces of preform assembled together, as discussed further herein.

The first leading edge section 420 includes a spar end connected to the spar section 410, which is referred to herein as a first leading edge section spar end 422, and a tip distal from the spar section 410, which is referred to herein as a first leading edge section tip 424. The second leading edge section 430, the first trailing edge section 440, and the second trailing edge section 450 are similarly shaped, and each includes a spar end and a tip. The second leading edge section 430 includes a second leading edge section spar end 432 connected to the spar section 410 and a second leading edge section tip 434 distal from the spar section 410. The first trailing edge section 440 includes a first trailing edge section spar end 442 connected to the spar section 410 and a first trailing edge section tip 444 distal from the spar section 410. The second trailing edge section 450 includes a second trailing edge section spar end 452 connected to the spar section 410 and a second trailing edge section tip 454 distal from the spar section 410.

In some embodiments, the spar section 410 can be positioned to locate the spar section 350 (FIG. 4) of the resulting airfoil 300 closer to the leading edge 312 (FIG. 4) than to the trailing edge 314 (FIG. 4). Each of the first trailing edge section 440, and the second trailing edge section 450 can be longer in the chordwise direction Ch than each of the first leading edge section 420 and the second leading edge section 430.

In the thickness direction T, the first leading edge section 420 is positioned opposite the second leading edge section 430 with a gap, which is referred to herein as a leading portion gap 462, formed between the first leading edge section 420 and the second leading edge section 430. The first leading edge section tip 424 and the second leading edge section tip 434 are disposed to form an opening, which is referred to herein as a leading portion gap opening 464 between the first leading edge section tip 424 and the second leading edge section tip 434. The leading portion gap opening 464 is an opening into the leading portion gap 462. Similarly, the first trailing edge section 440 is positioned opposite the second trailing edge section 450 with a gap, which is referred to herein as a trailing portion gap 466, formed between the first trailing edge section 440 and the second trailing edge section 450. The first trailing edge section tip 444 and the second trailing edge section tip 454 are disposed to form an opening, which is referred to herein as a trailing portion gap opening 468 between the first trailing edge section tip 444 and the second trailing edge section tip 454. The trailing portion gap opening 468 is an opening into the trailing portion gap 466.

FIG. 5B is a schematic, cross-sectional view of a second step showing filler inserts being inserted into the woven fabric 400 to form an initial preform 402. In this step, one or more inserts are inserted into the woven fabric 400. The inserts in the depicted embodiment are the leading piece of filler material 380 and the trailing piece of filler material 390. The leading piece of filler material 380 is positioned in the leading portion gap 462, and the trailing piece of filler material 390 is positioned in the trailing portion gap 466. The leading piece of filler material 380 can be positioned in the leading portion gap 462 by inserting the leading piece of filler material 380 through the leading portion gap opening 464 and positioning the leading piece of filler material 380 in the leading portion gap 462. Similarly, the trailing piece of filler material 390 can be positioned in the trailing portion gap 466 by inserting the trailing piece of filler material 390 through the trailing portion gap opening 468 and positioning the leading piece of filler material 380 in the trailing portion gap 466.

The leading piece of filler material 380 has a proximal portion, which is referred to herein as a leading piece of filler material proximal portion 382, and a distal portion, which is referred to herein as a leading piece of filler material distal portion 384. The leading piece of filler material proximal portion 382 has a width wider that can be wider than a width of the leading piece of filler material distal portion 384, and, as depicted, the leading piece of filler material distal portion 384 is tapered to come to a point. The leading piece of filler material 380 can be tapered from the leading piece of filler material proximal portion 382 to the leading piece of filler material distal portion 384. Similarly, the trailing piece of filler material 390 has a proximal portion, which is referred to herein as a trailing piece of filler material proximal portion 392, and a distal portion, which is referred to herein as a trailing piece of filler material distal portion 394. The trailing piece of filler material 390 can be shaped similarly to the leading piece of filler material 380.

When the leading piece of filler material 380 is positioned in the leading portion gap 462, the leading piece of filler material 380 can be positioned with the leading piece of filler material proximal portion 382 positioned closer to the spar section 410 than the leading piece of filler material distal portion 384. Similarly, when the trailing piece of filler material 390 is positioned in the trailing portion gap 466, the trailing piece of filler material 390 can be positioned with the trailing piece of filler material proximal portion 392 positioned closer to the spar section 410 than the trailing piece of filler material distal portion 394. More specifically, each of the leading piece of filler material 380 and the trailing piece of filler material 390 can be positioned in the leading portion gap 462 and the trailing portion gap 466, respectively, to abut the spar section 410.

FIG. 5C is a schematic, cross-sectional view of a third step, showing the initial preform 402 being shaped to form a shaped preform 404. After the leading piece of filler material 380 and the trailing piece of filler material 390 are positioned in the leading portion gap 462 and the trailing portion gap 466, respectively, the leading portion gap opening 464 (FIG. 5B) and the trailing portion gap opening 468 (FIG. 5B) are closed. More specifically, the first leading edge section tip 424 and the second leading edge section tip 434 are moved proximate to each other and can be moved to abut each other. The first leading edge section 420 and the second leading edge section 430 are positioned to surround the leading piece of filler material 380. The first trailing edge section tip 444 and the second trailing edge section tip 454 also are moved proximate to each other and can be moved to abut each other. The first trailing edge section 440 and the second trailing edge section 450 are positioned to surround the trailing piece of filler material 390. The initial preform 402 also can be shaped to have the desired shape for the airfoil 300, forming the shaped preform 404.

Once shaped, the process of forming the airfoil 300 continues with the steps discussed above with respect to FIG. 3. During this process, after the shaped preform 404 is prepared, the matrix material is introduced and cured to generate the composite airfoil 300. As noted above, the first leading edge section tip 424 and the second leading edge section tip 434 are moved proximate to each other. The first leading edge section tip 424 and the second leading edge section tip 434 are positioned close enough to each other such that, when the matrix material is introduced and cured, the matrix material bonds the first leading edge section 420 and the second leading edge section 430 to each other and, more specifically, the first leading edge section tip 424 and the second leading edge section tip 434 to each other. Similarly, the first trailing edge section tip 444 and the second trailing edge section tip 454 are positioned close enough to each other such that, when the matrix material is introduced and cured, the matrix material bonds the first trailing edge section 440 and the second trailing edge section 450 to each other and, more specifically, the first trailing edge section tip 444 and the second trailing edge section tip 454 to each other.

When the piece of filler material (e.g., leading piece of filler material 380 and the trailing piece of filler material 390) is a fugitive material, the method can include a step of removing the filler material. This step can include heating the shaped preform 404 or the airfoil 300 to melt the filler material and then a step of removing or draining the filler material from the preform 404 or the airfoil 300.

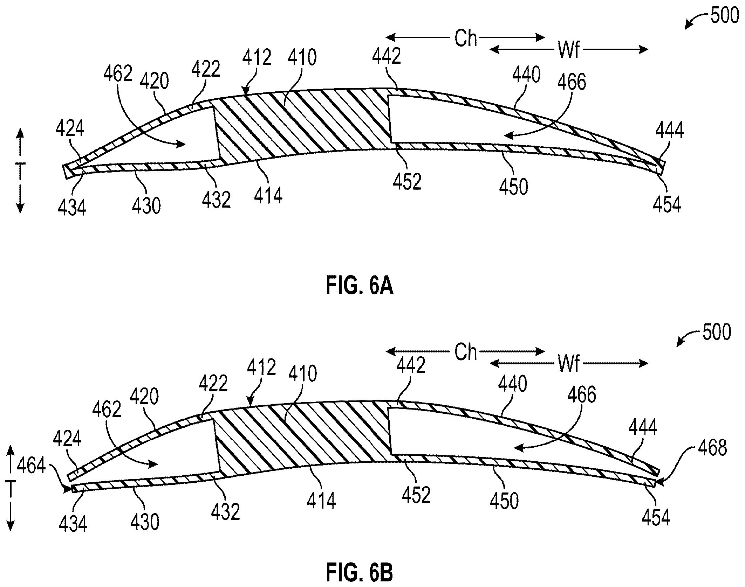

FIGS. 6A and 6B illustrate additional steps that may be used in the method of forming the airfoil 300 of FIG. 4. FIG. 6A is a schematic, cross-sectional view of a woven fabric 500 that may be used to form the airfoil 300 of FIG. 4. The woven fabric 500 shown in FIG. 6A may be woven similarly to the woven fabric 400 discussed above, but at least a portion of the first leading edge section 420 and the second leading edge section 430 are integrally woven together. More specifically, in the depicted embodiment, the first leading edge section tip 424 and the second leading edge section tip 434 are integrally woven together during the weaving process (step S10 discussed above with reference to FIG. 3). Similarly, at least a portion of the first trailing edge section 440 and the second trailing edge section 450 are integrally woven together. More specifically, in the depicted embodiment, the first trailing edge section tip 444 and the second trailing edge section tip 454 are integrally woven together.

FIG. 6B is a schematic, cross-sectional view of a step subsequent to forming the woven fabric 500 shown in FIG. 6A. To form at least the leading portion gap opening 464 and, in some embodiments, the leading portion gap 462, the portions of the first leading edge section 420 and the second leading edge section 430 that are integrally woven with each other are separated using a cutting tool appropriate for the material of the reinforcing fiber tows 202 (FIG. 2A). Similarly, the portions of the first trailing edge section 440 and the second trailing edge section 450 that are integrally woven with each other are separated to form at least the trailing portion gap opening 468 and, in some embodiments, the trailing portion gap 466. The process can then continue as discussed above with respect to FIGS. 5A to 5C.

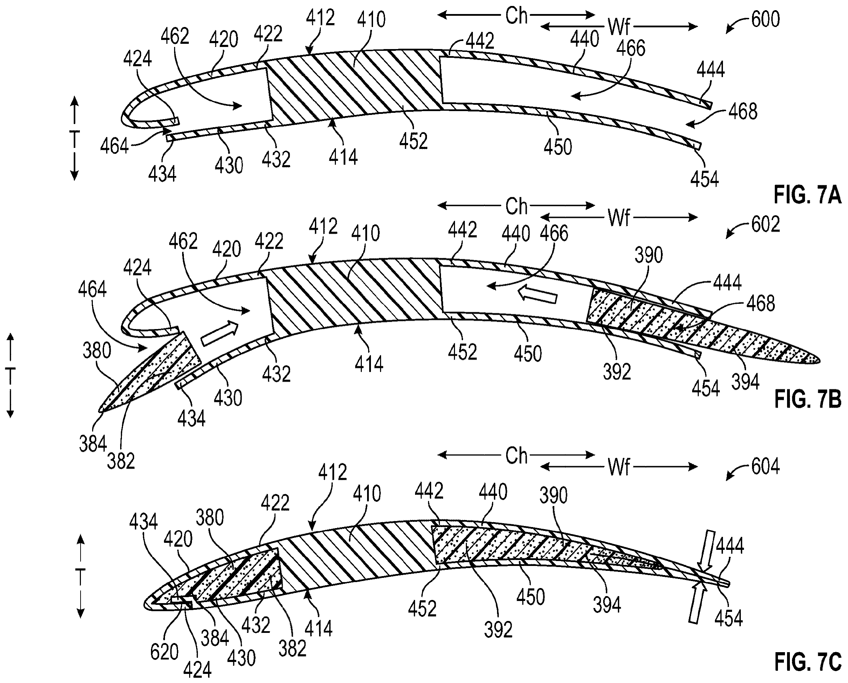

FIGS. 7A to 7C illustrate a variation to that shown in FIGS. 5A to 5C of a method of forming the airfoil 300 shown in FIG. 4. The method shown in FIGS. 7A to 7C is similar to the method discussed above with reference to FIGS. 5A to 5C, and that discussion applies here. The following discussion will focus on the differences. FIG. 7A depicts a first step of providing a woven fabric 600. With the method discussed above, the bonded region closing the gap 464 is located at the leading edge 312 (FIG. 4) of the airfoil 300 (FIG. 4). This bonded region may be a week point and thus, in some embodiments, the gap 464 or the bonded region may be located on the side of the airfoil 300 instead of at the leading edge 312. The woven fabric 600 shown in FIG. 7A may be woven similarly to the woven fabric 400 discussed above, but one of the first leading edge section 420 and the second leading edge section 430 is longer than the other. In the woven fabric 600 depicted in FIG. 7A, the first leading edge section 420 is longer than the second leading edge section 430. This extra length can be woven or otherwise shaped to form a hooked portion, which is referred to herein as a J-hook portion 610. The J-hook portion 610 will form the leading edge 312.

FIG. 7B is a schematic, cross-sectional view of a second step showing filler material being inserted into the woven fabric 600 to form an initial preform 602. This step is similar to the second step discussed above with reference to FIG. 4B, but the location of the leading portion gap opening 464 is moved.

FIG. 7C is a schematic, cross-sectional view of a third step, showing the initial preform 602 being shaped to form a shaped preform 604. After the leading piece of filler material 380 is positioned in the leading portion gap 462, the leading portion gap opening 464 (FIG. 5B) is closed. More specifically, the first leading edge section tip 424 and the second leading edge section tip 434 are arranged with one overlapping the other to form an overlapping section 620. In the depicted embodiment, a portion of the first leading edge section 420 with the first leading edge section tip 424 is positioned on the outside of a portion of the second leading edge section 430 with the second leading edge section tip 434 and, more specifically, abutting the second leading edge section 430 in the overlapping section 620. In the overlapping section 620, the first leading edge section 420 and the second leading edge section 430 are positioned close enough to each other such that, when the matrix material is introduced and cured, the matrix material bonds the first leading edge section 420 and the second leading edge section 430 to each other in the overlapping section 620.

The J-hook portion 610 and the overlapping section 620 are shown and described with respect to the leading edge sections (i.e., the first leading edge section 420 and the second leading edge section 430) in FIGS. 7A to 7C, but this arrangement and process can also be applied to the trailing edge sections (i.e., the first trailing edge section 440 and the second trailing edge section 450).

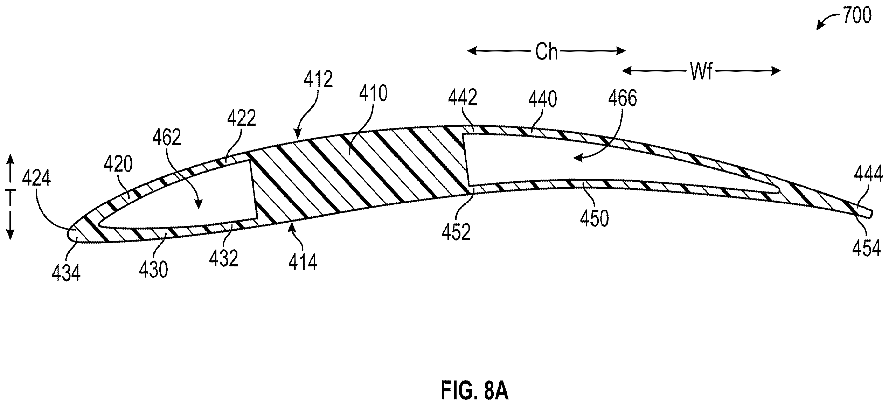

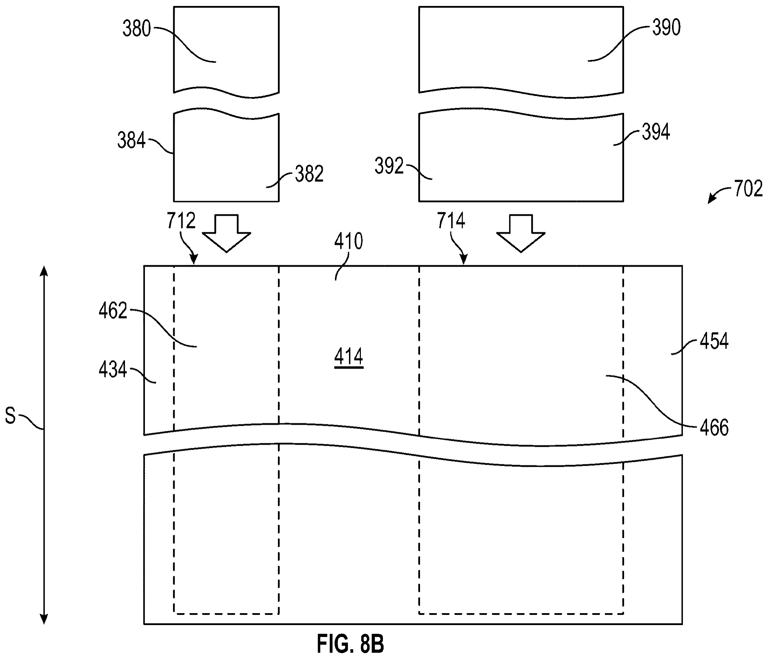

FIGS. 8A and 8B illustrate alternate steps that may be used in the method of forming the airfoil 300 of FIG. 4. FIG. 8A is a schematic, cross-sectional view of a woven fabric 700 that may be used to form the airfoil 300 of FIG. 4. The woven fabric 700 shown in FIG. 6A may be woven similarly to the woven fabric 500 discussed above with reference to FIG. 6A with at least a portion of the first leading edge section 420 and the second leading edge section 430 integrally woven together and at least a portion of the first trailing edge section 440 and the second trailing edge section 450 are integrally woven together. More specifically, in the depicted embodiment, the first leading edge section tip 424 and the second leading edge section tip 434 are integrally woven together, and the first trailing edge section tip 444 and the second trailing edge section tip 454 are integrally woven together.

FIG. 8B is a schematic view of a second step showing filler inserts being inserted into the woven fabric 700 to form an initial preform 702. In this step, one or more inserts, such as the leading piece of filler material 380 and the trailing piece of filler material 390, are inserted into the woven fabric 700 in a manner similar to the step discussed above with reference to FIG. 5B. The leading piece of filler material 380 can be positioned in the leading portion gap 462 by inserting the leading piece of filler material 380 through a leading portion gap opening 712 and positioning the leading piece of filler material 380 in the leading portion gap 462. Similarly, the trailing piece of filler material 390 can be positioned in the trailing portion gap 466 by inserting the trailing piece of filler material 390 through a trailing portion gap opening 714 and positioning the leading piece of filler material 380 in the trailing portion gap 466. Here, each of the leading portion gap opening 712 and trailing portion gap opening 714 is positioned at an upper end or a lower end of the woven fabric 700 in a spanwise direction S of the woven fabric 700 and initial preform 702. The end of the leading portion gap 462 an opposite the leading portion gap opening 712 in the spanwise direction S can be closed, such as by weaving the first leading edge section 420 and the second leading edge section 430. Similarly, the end of the trailing portion gap 466 an opposite the trailing portion gap opening 714 in the spanwise direction S can be closed, such as by weaving the first trailing edge section 440 with second trailing edge section 450. Additional shaping can be performed, such as to close the leading portion gap opening 712 and the trailing portion gap opening 714. For example, the shaping can include positioning the first leading edge section 420 and the second leading edge section 430 to surround the leading piece of filler material 380, positioning the first trailing edge section 440 and the second trailing edge section 450 to surround the trailing piece of filler material 390, or both to generate a shaped preform. Once shaped, the process of forming the airfoil 300 continues with the steps discussed above with respect to FIG. 3.

With the 3D woven fabric 400, 500, 600, 700 having the shape discussed above, the woven fabric 400, 500, 600, 700 can be used to form a spar 320 that has reinforcing fiber tows 202 extending through the thickness direction of the spar 320 and into at least a portion of a plurality of edge sections that can be used to form the skin 346 of the airfoil. Using a 3D woven fabric with the spar section integrally formed with the edge sections provides a strong airfoil, even in the thickness direction, avoiding strength issues arising from interlaminar strength limitations or other discontinuities that can occur in other layup processes.

Further aspects of the present disclosure are provided by the subject matter of the following clauses.

A method of manufacturing a woven fabric for a composite airfoil for a turbine engine includes weaving a plurality of reinforcing fiber tows to form a woven fabric, the reinforcing fiber tows including a plurality of first fiber tows and a plurality of second fiber tows oriented transversely to the plurality of first fiber tows, the woven fabric being a three-dimensional woven fabric having a first direction, a second direction orthogonal to the first direction, and a thickness direction orthogonal to each of the first direction and the second direction, the plurality of first fiber tows being arranged in the thickness direction to form a plurality of first fiber layers and the plurality of second fiber tows being arranged in the thickness direction to form a plurality of second fiber layers. The method also includes forming, during weaving the plurality of reinforcing fiber tows, a spar section of the woven fabric; forming, during weaving the plurality of reinforcing fiber tows, a first edge section integrally woven with the spar section and extending in the second direction therefrom; and forming, during weaving the plurality of reinforcing fiber tows, a second edge section integrally woven with the spar section and extending in the second direction therefrom. The second edge section is positioned opposite the first edge section with a gap formed therebetween.

The method of the preceding clause, wherein the first edge section being longer than the second edge section and the first edge section is shaped to form a hooked portion.

A method of manufacturing a preform for a composite airfoil for a turbine engine includes preparing a woven fabric using the method of any preceding clause, and positioning a piece of filler material in the gap between the first edge section and the second edge section.

The method of any preceding clause, wherein the piece of filler material being positioned in the gap to abut the spar section.

The method of any preceding clause, wherein the piece of filler material includes a proximal portion and a distal portion, the piece of filler material being tapered with the proximal portion having a width wider than a width of the distal portion, the piece of filler material being positioned in the gap with the proximal portion positioned closer to the spar section than the distal portion.

A method of forming a composite airfoil includes preparing a preform using the method of any preceding clause, introducing a matrix material into the preform, and curing the preform including the matrix material to construct the composite airfoil.

The method of any preceding clause, wherein the first edge section being longer than the second edge section and the first edge section is shaped to form a hooked portion, and the method further includes positioning a portion of the first edge section and a portion of the second edge section to form an overlapping region after the piece of filler material is positioned in the gap between the first edge section and the second edge section.

The method of any preceding clause, wherein the woven fabric has a spanwise direction, an opening is formed between the first edge section and the second edge section on one end of the woven fabric in the spanwise direction, and positioning the piece of filler material in the gap includes inserting the piece of filler material through the opening between the first edge section and the second edge section.

The method of any preceding clause, wherein the first edge section includes a first edge section spar end connected to the spar section and a first edge section tip distal from the spar section, and the second edge section includes a second edge section spar end connected to the spar section and a second edge section tip distal from the spar section, the first edge section tip and the second edge section tip being disposed to form an opening therebetween, and positioning the piece of filler material in the gap includes inserting the piece of filler material through the opening between the first edge section tip and the second edge section tip.

The method of any preceding clause, wherein, during weaving the plurality of reinforcing fiber tows, the first edge section tip is integrally woven with the second edge section tip, and the method further includes separating the first edge section tip from the second edge section tip to form the opening therebetween.

The method of any preceding clause, wherein the method further includes positioning the first edge section and the second edge section to surround the piece of filler material and to generate a shaped preform.

A method of forming a composite airfoil, wherein the method includes preparing a shaped preform using the method of any preceding clause, introducing a matrix material into the shaped preform, and curing the shaped preform including the matrix material to construct the composite airfoil, wherein curing the shaped preform bonds the first edge section and the second edge section with each other.

The method of any preceding clause, wherein the composite airfoil includes a skin and a spar, and the first edge section and the second edge section form at least a portion of the skin of the composite airfoil, and the spar section forms the spar of the airfoil.

The method of any preceding clause, wherein the first edge section is a first trailing edge section, the second edge section is a second trailing edge section, and the gap between the first trailing edge section and the second trailing edge section is a trailing portion gap. The method further includes forming, during weaving the plurality of reinforcing fiber tows, a first leading edge section integrally woven with the spar section and extending in the second direction therefrom; and forming, during weaving the plurality of reinforcing fiber tows, a second leading edge section integrally woven with the spar section and extending in the second direction therefrom. The second leading edge section is positioned opposite the first leading edge section with a leading portion gap formed therebetween, and the first leading edge section and the second leading edge section is positioned on an opposite side of the spar section in the second direction from the first trailing edge section and the second trailing edge section.

The method of any preceding clause, wherein each of the first trailing edge section and the second trailing edge section being longer in the second direction than each of the first leading edge section and the second leading edge section.

A method of manufacturing a preform for a composite airfoil for a turbine engine includes preparing a woven fabric using the method of any preceding clause, positioning a trailing portion piece of filler material in the trailing portion gap, and positioning a leading portion piece of filler material in the leading portion gap.

A method of forming a composite airfoil includes preparing a preform using the method of any preceding clause, introducing a matrix material into the preform, and curing the preform including the matrix material to construct the composite airfoil.

The method of any preceding clause, wherein the trailing portion piece of filler material and the leading portion piece of filler material are positioned in the trailing portion gap or the leading portion gap, respectively, to abut the spar section.

A method of forming a composite airfoil includes preparing a preform using the method of any preceding clause, forming a shaped preform from the preform by positioning the first trailing edge section and the second trailing edge section to surround the trailing portion piece of filler material, and positioning the first leading edge section and the second leading edge section to surround the leading portion piece of filler material, introducing a matrix material into the shaped preform, and curing the shaped preform including the matrix material to construct the composite airfoil, wherein curing the shaped preform bonds the first trailing edge section and the second trailing edge section with each other, and bonds the first leading edge section and the second leading edge section with each other.

The method of any preceding clause, wherein the composite airfoil includes a skin and a spar, and the first trailing edge section, the second trailing edge section, the first leading edge section, and the second leading edge section forming at least a portion of the skin of the composite airfoil, and the spar section forms the spar of the composite airfoil.

The method of any preceding clause, wherein the reinforcing fiber tows include a plurality of interlocking fiber tows.

The method of the preceding clause, wherein the interlocking fiber tows are woven in an orthogonal interlocking pattern.

The method of the preceding clause, wherein the orthogonal interlocking pattern extends through the thickness of the spar section woven fabric.

The method of any preceding clause, wherein the orthogonal interlocking pattern extends through the thickness of the first edge section woven fabric.

The method of any preceding clause, wherein the orthogonal interlocking pattern extends through the thickness of the second edge section woven fabric.

The method of any preceding clause, wherein the interlocking fiber tows are woven in an angled interlock pattern.

The method of any preceding clause, wherein the angled interlock pattern extends through adjacent fiber layers in an alternating pattern or a sinusoidal pattern to interlock these adjacent layers with each other.

The method of any preceding clause, wherein the angled interlock pattern extends through more than two adjacent fiber layers.

The method of the preceding clause, wherein the angled interlock pattern extends through the thickness of the spar section woven fabric.

The method of any preceding clause, wherein the angled interlock pattern extends through the thickness of the first edge section woven fabric.

The method of any preceding clause, wherein the angled interlock pattern extends through the thickness of the second edge section woven fabric.

The method of any preceding clause, wherein the plurality of reinforcing fiber tows includes prepreg fiber tows to introduce the matrix material.

The method of any preceding clause, wherein introducing the matrix material includes injecting the matrix material into the preform.

The method of any preceding clause, wherein the plurality of first fiber tows is a plurality of warp fiber tows and the plurality of second fiber tows is a plurality of weft fiber tows.

The method of any preceding clause, wherein the first direction is a warp direction and the second direction is a weft direction.

The method of any preceding clause, wherein the piece of filler material is a piece of foam.

The method of any preceding clause, wherein the piece of filler material is a piece a polymeric material in a honeycomb structure.

The method of any preceding clause, wherein the piece of filler material is a fugitive material.

The method of any preceding clause, further comprising removing the fugitive material.

The woven fabric formed according to the method of any preceding clause.

A woven fabric including a spar section, a first edge section integrally woven with the spar section and extending in the second direction therefrom, and a second edge section integrally woven with the spar section and extending in the second direction therefrom. The second edge section is positioned opposite the first edge section with a gap formed therebetween.

The woven fabric of the preceding clause formed of a plurality of reinforcing fiber tows. The reinforcing fiber tows including a plurality of first fiber tows and a plurality of second fiber tows oriented transversely to the plurality of first fiber tows. The woven fabric is a three-dimensional woven fabric having a first direction, a second direction orthogonal to the first direction, and a thickness direction orthogonal to each of the first direction and the second direction. The plurality of first fiber tows being arranged in the thickness direction to form a plurality of first fiber layers and the plurality of second fiber tows being arranged in the thickness direction to form a plurality of second fiber layers.

The woven fabric of any preceding clause, wherein the first edge section is longer than the second edge section and the first edge section is shaped to form a hooked portion, and the method further comprises positioning a portion of the first edge section and a portion of the second edge section to form an overlapping region after the piece of filler material is positioned in the gap between the first edge section and the second edge section.

The woven fabric of any preceding clause, wherein the first edge section is longer than the second edge section and the first edge section is shaped to form a hooked portion.

The woven fabric of any preceding clause, wherein the first edge section includes a first edge section spar end connected to the spar section and a first edge section tip distal from the spar section, and the second edge section includes a second edge section spar end connected to the spar section and a second edge section tip distal from the spar section, the first edge section tip and the second edge section tip being disposed to form an opening therebetween.

The woven fabric of any preceding clause, wherein the first edge section tip is integrally woven with the second edge section tip.

The woven fabric of any preceding clause, wherein the first edge section is a first trailing edge section, the second edge section is a second trailing edge section, and the gap between the first trailing edge section and the second trailing edge section is a trailing portion gap. The woven fabric further includes a first leading edge section integrally woven with the spar section and extending in the second direction therefrom, a second leading edge section integrally woven with the spar section and extending in the second direction therefrom, the second leading edge section being positioned opposite the first leading edge section with a leading portion gap formed therebetween. The first leading edge section and the second leading edge section are positioned on an opposite side of the spar section in the second direction from the first trailing edge section and the second trailing edge section.

The woven fabric of the preceding clause, wherein each of the first trailing edge section and the second trailing edge section is longer in the second direction than each of the first leading edge section and the second leading edge section.

A preform includes the woven fabric of any preceding clause and a piece of filler material in the gap between the first edge section and the second edge section.

The preform of the preceding clause, wherein the piece of filler material abuts the spar section.

The preform of any preceding clause, wherein the piece of filler material includes a proximal portion and a distal portion, the piece of filler material being tapered with the proximal portion having a width wider than a width of the distal portion, the proximal portion being closer to the spar section than the distal portion.

A preform includes the woven fabric of any preceding clause, a trailing portion piece of filler material in the trailing portion gap, and a leading portion piece of filler material in the leading portion gap.

The preform of the preceding clause, wherein the leading portion piece of filler material abuts the spar section, and the trailing portion piece of filler material abuts the spar section.

Although the foregoing description is directed to certain embodiments, other variations and modifications will be apparent to those skilled in the art, and may be made without departing from the disclosure. Moreover, features described in connection with one embodiment may be used in conjunction with other embodiments, even if not explicitly stated above.

## Claims

1. A method of manufacturing a woven fabric (400, 500, 600, 700) for a composite airfoil (300) for a turbine engine (100), the method comprising:
weaving a plurality of reinforcing fiber tows (202) to form a woven fabric (400, 500, 600, 700), the reinforcing fiber tows (202) including a plurality of first fiber tows (210) and a plurality of second fiber tows (220) oriented transversely to the plurality of first fiber tows (210), the woven fabric (400, 500, 600, 700) being a three-dimensional woven fabric (400, 500, 600, 700) having a first direction, a second direction orthogonal to the first direction, and a thickness direction orthogonal to each of the first direction and the second direction, the plurality of first fiber tows (210) being arranged in a plurality of first fiber layers (212) in the thickness direction and the plurality of second fiber tows (220) being arranged a plurality of second fiber layers (222) in the thickness direction;
forming, during weaving the plurality of reinforcing fiber tows (202), a spar section (410) of the woven fabric (400, 500, 600, 700);
forming, during weaving the plurality of reinforcing fiber tows (202), a first edge section (420, 440) integrally woven with the spar section (410) and extending in the second direction therefrom; and
forming, during weaving the plurality of reinforcing fiber tows (202), a second edge section (430, 450) integrally woven with the spar section (410) and extending in the second direction therefrom, the second edge section (430, 450) being positioned opposite the first edge section (420, 440) with a gap (462, 464) formed therebetween.

2. The method of claim 1, wherein the first edge section (420, 440) is longer than the second edge section (430, 450) and the first edge section (420, 440) is shaped to form a hooked portion (610).

3. A method of manufacturing a preform (402, 404, 602, 604, 702) for a composite airfoil (300) for a turbine engine (100), the method comprising:
preparing a woven fabric (400, 500, 600, 700) using the method of claim 1 or 2; and
positioning a piece of filler material (380, 390) in the gap (462, 464) between the first edge section (420, 440) and the second edge section (430, 450),
wherein preferably the piece of filler material (380, 390) is positioned in the gap (462, 464) to abut the spar section (410).

4. The method of claim 3, wherein the piece of filler material (380, 390) includes a proximal portion (382, 392) and a distal portion (384, 394), the piece of filler material (380, 390) being tapered with the proximal portion (382, 392) having a width wider than a width of the distal portion (384, 394), the piece of filler material (380, 390) being positioned in the gap (462, 464) with the proximal portion (382, 392) positioned closer to the spar section (410) than the distal portion (384, 394).

5. The method of claim 3 or 4, wherein the woven fabric (400, 500, 600, 700) has a spanwise direction, an opening (464, 468) is formed between the first edge section (420, 440) and the second edge section (430, 450) on one end of the woven fabric (400, 500, 600, 700) in the spanwise direction, and
wherein positioning the piece of filler material (380, 390) in the gap (462, 464) includes inserting the piece of filler material (380, 390) through the opening (464, 468) between the first edge section (420, 440) and the second edge section (430, 450).

6. The method of claim 3 or 4, wherein the first edge section (420, 440) is longer than the second edge section (430, 450) and the first edge section (420, 440) is shaped to form a hooked portion (610) , and the method further comprises positioning a portion of the first edge section (420, 440) and a portion of the second edge section (430, 450) to form an overlapping region (620) after the piece of filler material (380, 390) is positioned in the gap (462, 464) between the first edge section (420, 440) and the second edge section (430, 450).

7. The method of any one of claims 3, 4, or 6, wherein the first edge section (420, 440) includes a first edge section spar end (422, 442) connected to the spar section (410) and a first edge section tip (424, 444) distal from the spar section (410), and the second edge section (430, 450) includes a second edge section spar end (432, 452) connected to the spar section (410) and a second edge section tip (434, 454) distal from the spar section (410), the first edge section tip (424, 444) and the second edge section tip (434, 454) being disposed to form an opening (464, 468) therebetween, and
wherein positioning the piece of filler material (380, 390) in the gap (462, 464) includes inserting the piece of filler material (380, 390) through the opening (464, 468) between the first edge section tip (424, 444) and the second edge section tip (434, 454).

8. The method of claim 7, wherein, during weaving the plurality of reinforcing fiber tows (202), the first edge section tip (424, 444) is integrally woven with the second edge section tip (434, 454), and
wherein the method further comprises separating the first edge section tip (424, 444) from the second edge section tip (434, 454) to form the opening (464, 468) therebetween.

9. A method of forming a composite airfoil (300), the method comprising:
preparing a preform (402, 404, 602, 604, 702) using the method of any one of claims 3 to 8;
introducing a matrix material into the preform (402, 404, 602, 604, 702); and
curing the preform (402, 404, 602, 604, 702) including the matrix material to construct the composite airfoil (300).

10. A method of forming a composite airfoil (300), the method comprising:
preparing a preform (402, 404, 602, 604, 702) using the method of any one of claims 3, 4, or 6 to 8;
positioning the first edge section (420, 440) and the second edge section (430, 450) to surround the piece of filler material (380, 390) and to generate a shaped preform (404, 604);
introducing a matrix material into the shaped preform (404, 604); and
curing the shaped preform (404, 604) including the matrix material to construct the composite airfoil (300), wherein curing the shaped preform (404, 604) bonds the first edge section (420, 440) and the second edge section (430, 450) with each other.

11. The method of claim 9 or 10, wherein the composite airfoil (300) includes a skin (346) and a spar (320), and
wherein the first edge section (420, 440) and the second edge section (430, 450) form at least a portion of the skin (346) of the composite airfoil (300), and the spar section (410) forms the spar (320) of the airfoil (300).

12. The method of claim 1, wherein the first edge section (440) is a first trailing edge section (440), the second edge section (450) is a second trailing edge section (450), and the gap (464) between the first trailing edge section (440) and the second trailing edge section (450) is a trailing portion gap (466),
wherein the method further comprises:
forming, during weaving the plurality of reinforcing fiber tows (202), a first leading edge section (420) integrally woven with the spar section (410) and extending in the second direction therefrom; and
forming, during weaving the plurality of reinforcing fiber tows (202), a second leading edge section (430) integrally woven with the spar section (410) and extending in the second direction therefrom, the second leading edge section (430) being positioned opposite the first leading edge section (420) with a leading portion gap (462) formed therebetween, and
wherein the first leading edge section (420) and the second leading edge section (430) are positioned on an opposite side of the spar section (410) in the second direction from the first trailing edge section (440) and the second trailing edge section (450).

13. The method of claim 12, wherein each of the first trailing edge section (440) and the second trailing edge section (450) is longer in the second direction than each of the first leading edge section (420) and the second leading edge section (430).

14. A method of manufacturing a preform (402, 404, 602, 604, 702) for a composite airfoil (300) for a turbine engine (100), the method comprising:
preparing a woven fabric (400, 500, 600, 700) using the method of claim 13;
positioning a trailing portion piece of filler material (390) in the trailing portion gap (466); and
positioning a leading portion piece of filler material (380) in the leading portion gap (462).

15. A method of forming a composite airfoil (300), the method comprising:
preparing a preform (402, 404, 602, 604, 702) using the method of claim 14;
forming a shaped preform from the preform (402, 404, 602, 604, 702) by:
positioning the first trailing edge section (440) and the second trailing edge section (450) to surround the trailing portion piece of filler material (390); and
positioning the first leading edge section (420) and the second leading edge section (430) to surround the leading portion piece of filler material (380);
introducing a matrix material into the shaped preform (404, 604); and
curing the shaped preform (404, 604) including the matrix material to construct the composite airfoil (300), wherein curing the preform bonds the first trailing edge section (440) and the second trailing edge section (450) with each other, and bonds the first leading edge section (420) and the second leading edge section (430) with each other.
